# EUROPEAN PATENT SPECIFICATION

(11) **EP 1 516 713 B1**
(45) Date of publication and mention of the grant of the patent: **16.07.2008**
(21) Application number: 03020631.2
(22) Date of filing: 10.09.2003
(51) Int. Cl.: B29C 49/24, B29C 49/48, B29C 49/56

(54) **Internally label-sticking mold**
Form mit internem haftenden Etikett
Moule avec étiquette collante à l'intérieur

(43) Date of publication of application: 23.03.2005
(73) Proprietor: Huang, Sheng-Chang, Kaohsiung County (TW); Supreme Technic Package Co., Ltd., Yen Chao Town Kaohsiung County (TW)
(72) Inventor: Huang, Sheng, Chang, Yen Chao Town Kaohsiung County (TW)
(74) Representative: Kador & Partner

(56) References cited:
- EP-A- 0 786 414
- DE-A- 1 704 242
- US-A- 5 049 349
- PATENT ABSTRACTS OF JAPAN vol. 016, no. 184 (M-1243), 6 May 1992 (1992-05-06) & JP 04 021426 A (KAMAYA KAGAKU KOGYO CO LTD), 24 January 1992 (1992-01-24)

## Description

### FIELD OF THE INVENTION:

This invention relates to an internally label-sticking mold, particularly to one consisting of an outer mold and an inner mold to blowingly mold plastic products stuck with a label during the blowingly molding process.

### BACKGROUND OF THE INVENTION:

Nowadays, conventional plastic products such as PET (polyethylene terephthalate) bottles are made in two methods described below.

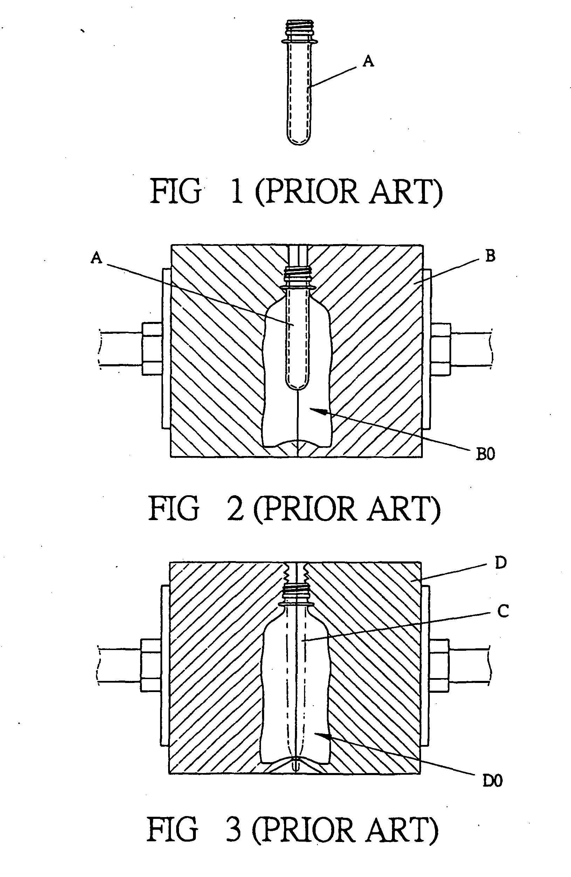

A first method shown in Fig. 1 includes a step of injecting a shaped material, a second step of placing the shaped material into an inner hollow B0 of a mold B (shown in Fig. 2), and then air is blown in the inner hollow B0 to form a product shaped as the inner hollow B0.

A second method shown in Fig. 2 includes a step of injecting directly a material(C) in an inner hollow D0 of a mold D and then blowing air into the inner hollow D0 to form a product.

The two products (E) made in the two methods have a thermally shrinking film label (F) fitted around the outer surface of the product properly and then warmed to let the label shrink around the product (E) to order to indicate the content filled in the product such as bottles for cider, juice, mineral water, etc.

However, this kind of thermally shrinking film label (E) is frequently stored in the room temperature or a little below the room temperature, so the thermally shrinking film label (F) may become loose against a bottle to fall off, causing some embarrassment of consumers.

Document DE 1 704 242 describes an apparatus for labelling plastic containers, by means of a mold made of multiple parts. The outer mold (4) impresses and cuts a label from a continuous label film strip such that the punched label can be transferred to a plastic container (6) surface (cf. figure 1). The punched label sticks to the punching mold part (4) by electrostatic interaction (cf. description page 5, lower section). The inner mold (3) provides the lower and upper sections of the complete container mold (cf. figure 2). The complete mold is then used as a template to form blown plastic containers with the label sticking to the container surface.

Document JP 04021426, describes the manufacture of a hollow vessel with a label, whereby the label is inserted into the inner surface of an inner mold by a label insertion device (25) and sucked onto the inner mold via decompression suction holes in the inner mold. However, the inner mold inner surface does not have an annular wall to support an inserted label. Instead the label is fixed by the action of a partial vacuum.

Also US 5,049,349 is related to a bag-in-box container. This box is made of paperboard and serves as a mold into which a PET bag is blown.

### SUMMARY OF THE INVENTION

The purpose of the invention is to offer a mold for manufacturing plastic containers such as bottles, which can stick a label on a finished container stably so as to make a container with a label integral without need of sticking a label separately.

A label is in advance placed in an inner hollow of an inner mold combined with an outer mold for blowing molding a plastic container stuck with the label, with one process to finish it integral.

The present invention relates to an internally label-sticking mold according to claim 1. Further embodiments are the subject of the dependent claims.

The mold used in the invention consists of an outer mold and an inner mold, and the outer mold has an interior hollow for containing the inner mold therein, and the inner mold has an interior hollow for a label to be placed therein together with a shaped material and then the outer mold and the inner mold are combined together for blowing molding a finished plastic container stuck with the label integral.

### BRIEF DESCRIPTION OF DRAWINGS

This invention will be better understood by referring to the accompanying drawings, wherein:
Figure 1 is a side view of an injected shaped material;
Figure 2 is a cross-sectional view of a mold used for a first conventional method of blowing molding;
Figure 3 is a cross-sectional view of a mold used for a second conventional method of blowing molding;

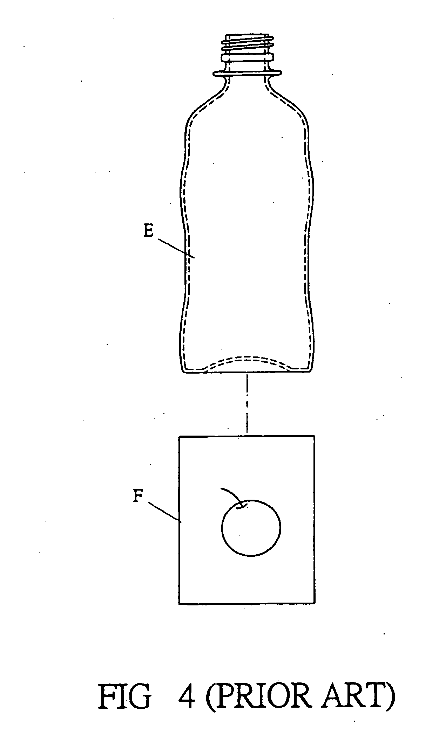

Figure 4 is a side view of a conventional finished product and a shrinking film in the conventional blowing molding;

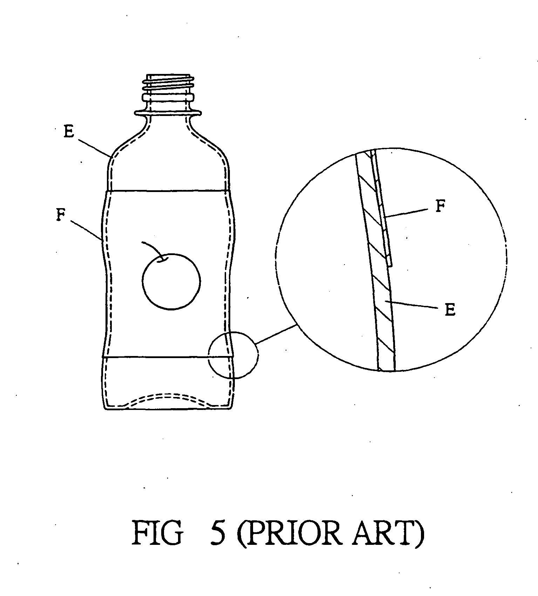

Figure 5 is a side view of the conventional product with the shrinking film combined together;
Figure 6 is an exploded cross-sectional view of a first embodiment of an internally label-sticking mold in the present invention;
Figure 7 is an exploded cross-sectional view of the first embodiment of an internally label-sticking mold in the present invention, indicating its movement;
Figure 8 is a cross-sectional view of the first embodiment of an internally label-sticking mold in the present invention;
Figure 9 is an upper view of an inner mold of the first embodiment of an internally label-sticking mold in the present invention;
Figure 10 is a cross-sectional view of the line A - A in Fig. 9;
Figure 11 is a cross-sectional view of the line B - B in Fig. 11;
Figure 12 is an upper view of an inner mold modified from the first embodiment of an internally label-sticking mold in the present invention;
Figure 13 is an upper view of an inner mold modified from the first embodiment of an internally label-sticking mold in the present invention;
Figure 14 is an upper view of an inner mold modified from the first embodiment of an internally label-sticking mold in the present invention;
Figure 15 is an upper view of an inner mold of a second embodiment of an internally label-sticking mold in the present invention;
Figure 16 is a cross-sectional view of the line C - C in Fig. 15;
Figure 17 is an exploded cross-sectional view of a third embodiment of an internally label-sticking mold in the present invention;
Figure 18 is a cross-sectional view of the third embodiment of an internally label-sticking mold in the present invention;
Figure 19 is a cross-sectional view of the third embodiment of an internally label-sticking mold in the present invention, indicating its first movement;
Figure 20 is cross-sectional view of the third embodiment of an internally label-sticking mold in the present invention, indicating its second movement;
Figure 21 is a cross-sectional view of the third embodiment of an internally label-sticking mold in the present invention, indicating its third movement;
Figure 22 is a cross-sectional view of the third embodiment of an internally label-sticking mold in the present invention, indicating its fourth movement;
Figure 23 is a cross-sectional view of an inner mold of the third embodiment of an internally label-sticking mold in the present invention;
Figure 24 is an upper view of an inner mold of a fourth embodiment of an internally label-sticking mold in the present invention;
Figure 25 is an upper view of an inner mold of a fourth embodiment of an internally label-sticking mold in the present invention;
Figure 26 is n upper view of inner mold of a fourth embodiment of an internally label-sticking mold in the present invention;
Figure 27 is an upper view of an inner mold of a fourth embodiment of an internally label-sticking mold in the present invention;
Figure 28 is a cross-sectional view of the line D - D in Fig. 27;
Figure 29 is a cross-sectional view of the line E - E in Fig. 27.
Figure 30 is an upper view of an inner mold in a fifth embodiment of an internally sticking mold in the present invention;
Figure 31 is a cross-sectional view of the F-F line in Figure 30;
Figure 32 is a cross-sectional view of the G-G line in Figure 31; and,
Figure 33 is a cross-sectional view of an inner mold of a fifth embodiment of an internally label-sticking mold in the present invention.

### DETAILED DESCRIPTION OF THE PREFERRED EMBODIMENT

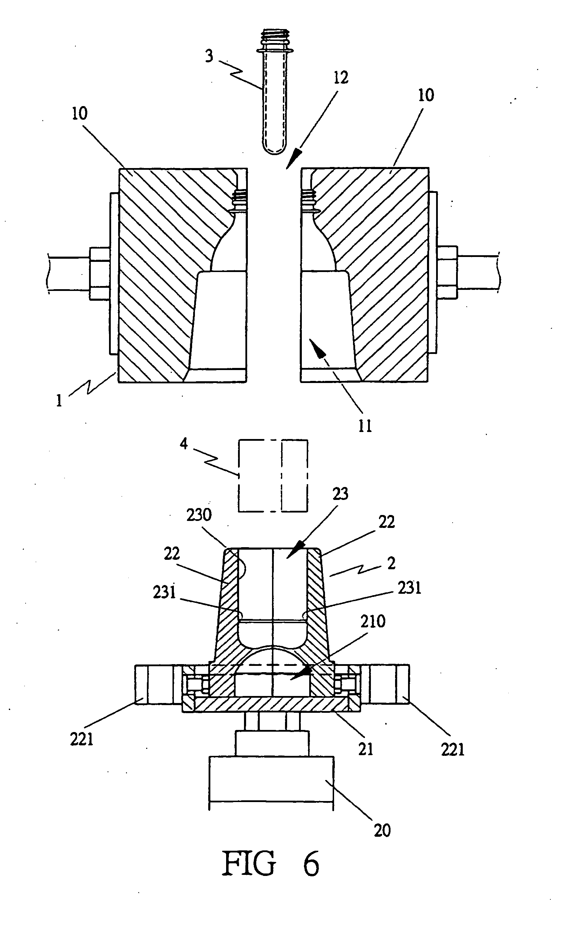

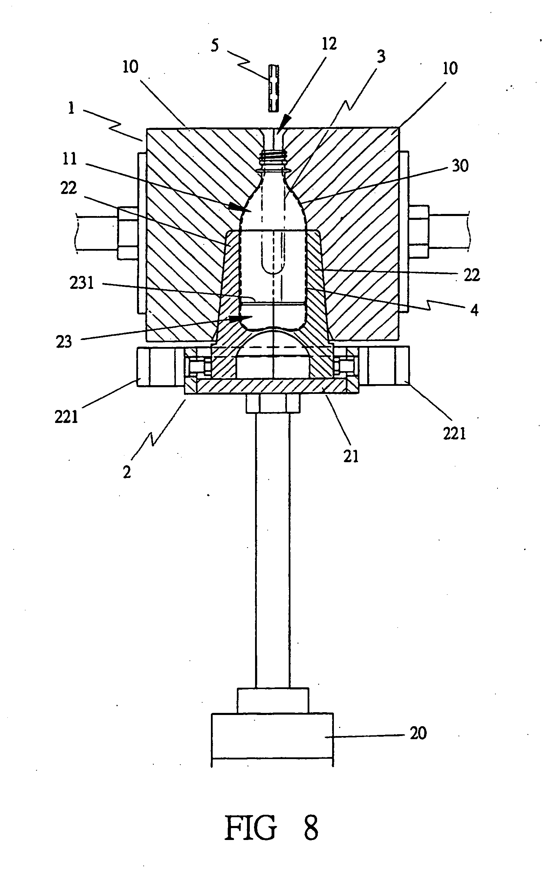

A first embodiment of an internally label-sticking mold in the present invention, as shown in Figs. 6 - 11, includes an outer mold 1 and an inner mold 2. The outer mold 1 consists of plural mold blocks 10, forming an interior hollow 11 and an inlet 12 in n upper side after the plural mold blocks combined together to become the outer mold 1. Then an injected shaped material 3 is placed through the inlet 12 and into the interior hollow 11 after heated up to a proper temperature to let it soften a little, so as to be blown into a finished product 30 shown in Fig. 8.

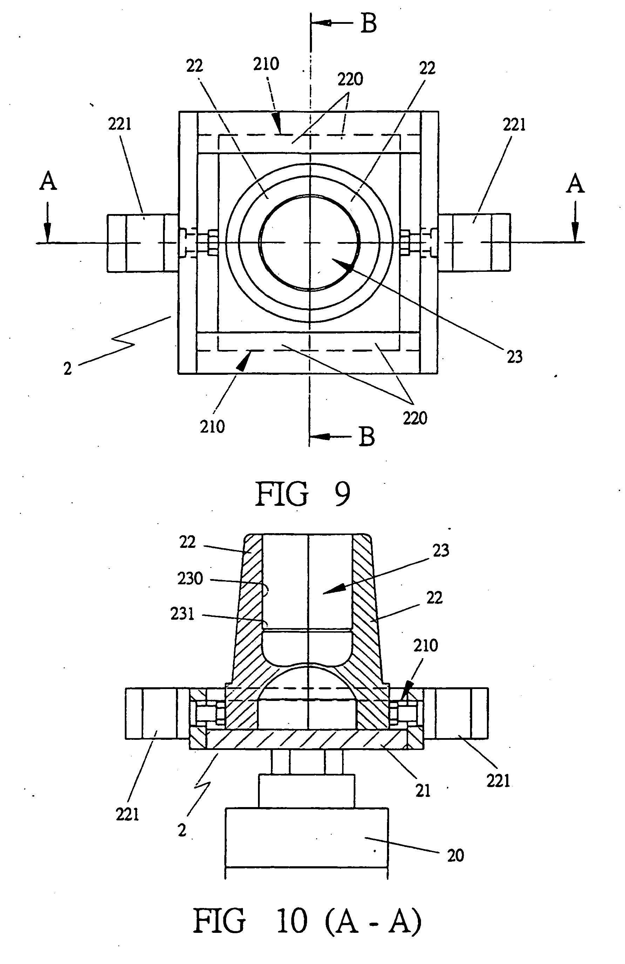

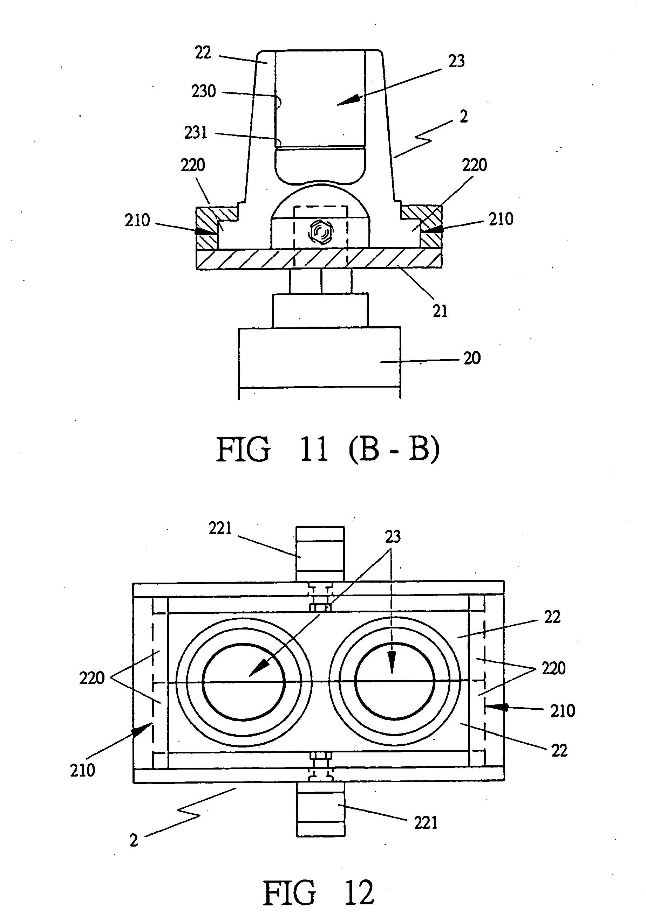

The inner mold 2 may be made of one piece integral or consist of plural mold blocks, and a drive member 20 is provided for moving the inner mold 2 up and down, and it can be an oil pressure cylinder, an air pressure cylinder, a threaded rod moved by a motor, or a threaded rod moved by an oil pressure motor. The drive member 20 is fixed firmly with a lower mold base 21, which has a slide groove 210 as shown in Figs. 9 and 11 for the inner mold block 22 to fit therein. Then the inner mold block 22 has a slide member 220 formed in a lower section fitting in the slide groove 210 to enable the inner mold block 22 move in a regular route. Further, the inner mold 2 has an interior hollow 23 shaped as the shape of a plastic product 30 to be blown molded. In addition, an annular wall 231 is formed on an inner surface defining the interior hollow 23 for placing a label 4 thereon, with the annular wall 231 limiting the depth of the label 4 in the interior hollow 23. Besides, the first embodiment may have plural mold blocks 22 for convenience of taking various shaped plastic products 30 out of the inner mold 2. As for the drive member 20, the air pressure cylinder is the most preferred, with other power means also usable without doubt, for easily opening, closing the inner mold blocks 22 and taking various shaped plastic products 30 out of the inner mold blocks 22.

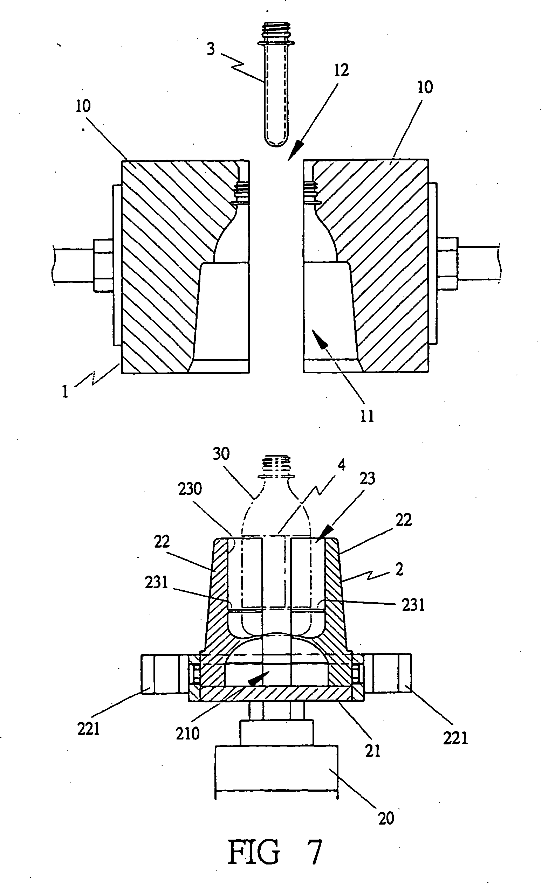

In the first embodiment, the shaped material 3 is placed in the outer mold 1, with the label 4 placed in advance in the inner hollow 23 of the inner mold 2. Then the outer mold 1 is closed, with the inner mold 2 is pushed in the interior hollow 11 of the outer mold 1 by the drive member 20 at the same time. Now air is blown in the interior hollows 11 and 23 of the outer and the inner mold 1 and 2 through an air tube 5 via the inlet 12 of the outer mold 1, inflating (or blowing) the shaped material 3 into a plastic product 30 with the label 4 stuck on the plastic product 30 as integral, as shown in Figs. 7 and 8. After that, the inner mold 2 is separated with the outer mold 1, with the inner mold blocks 22 moved off the outer mold 1 and opened by the drive member 221 so as to let the finished plastic product 30 stuck with the label 4 taken out of the outer mold 1.

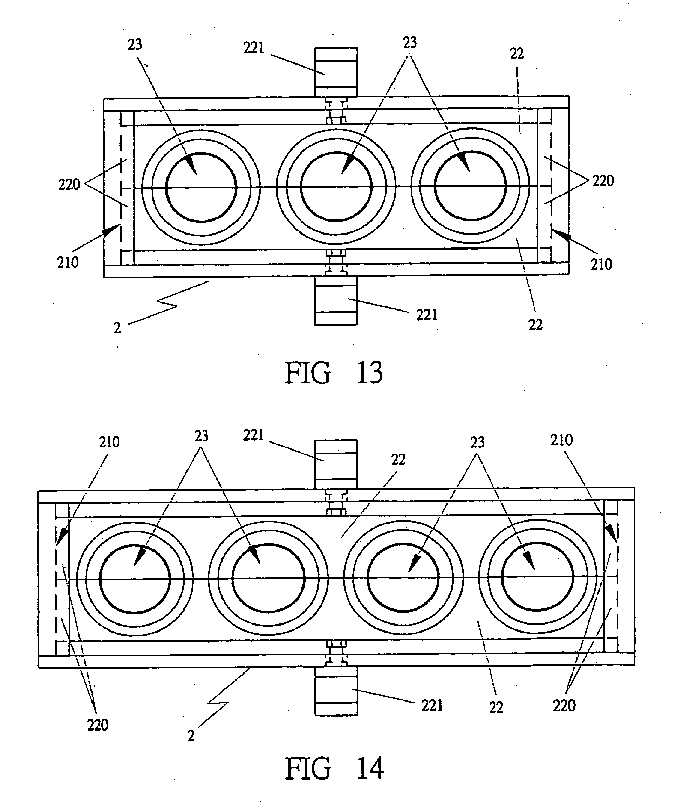

Next, Figs. 12 - 14 show embodiment of an internally label-sticking mold respectively modified from the first embodiment, having an inner mold 2 consisting of plural interior hollows 23 for manufacturing plural plastic products at one time of blowing molding process, having the same effect as the first embodiment.

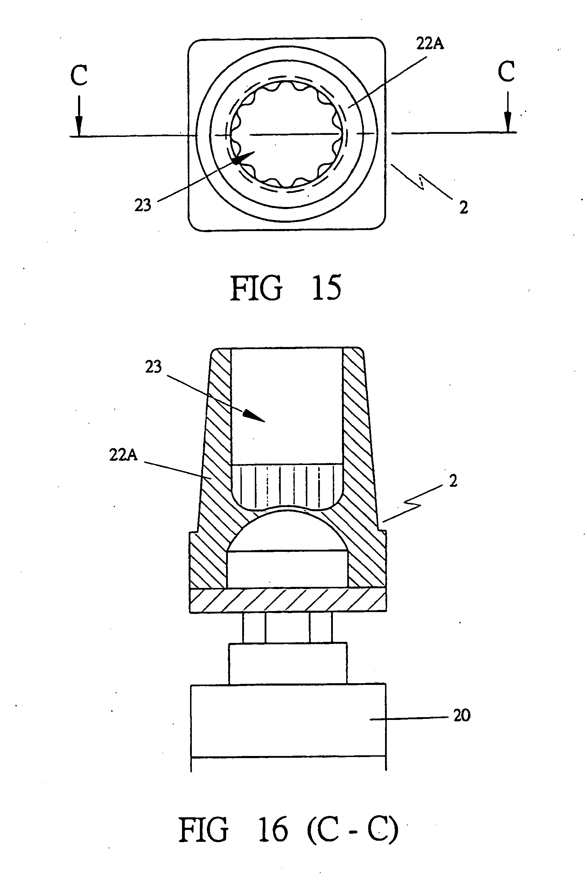

Figs. 15 and 16 show a second embodiment of an internally label-sticking mold, also modified from the first embodiment and having an inner mold 2 made of a mold block 22A integral, having an interior hollow 23, but not using the drive member 221, having the same effect of the first embodiment.

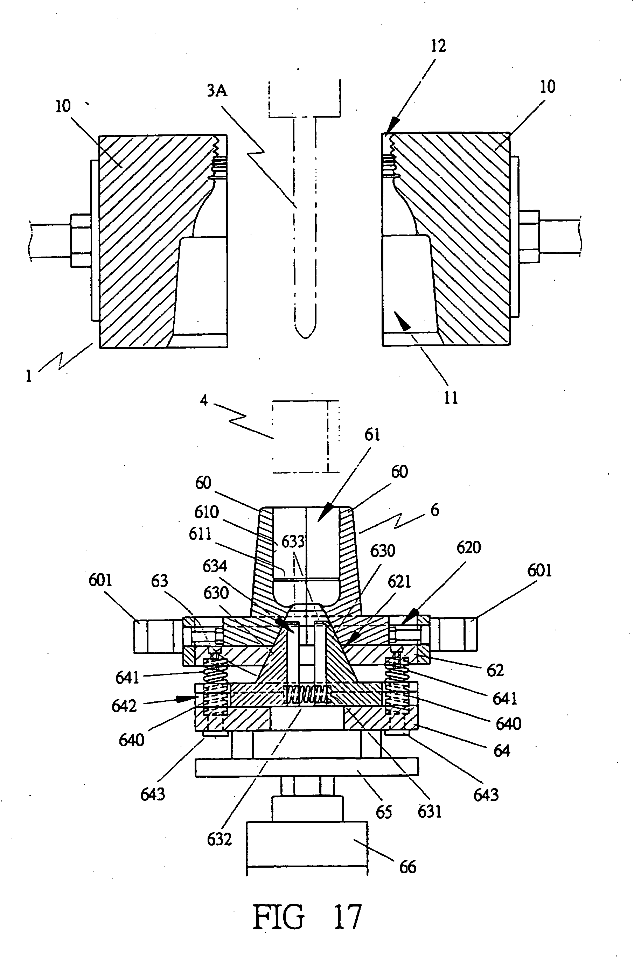

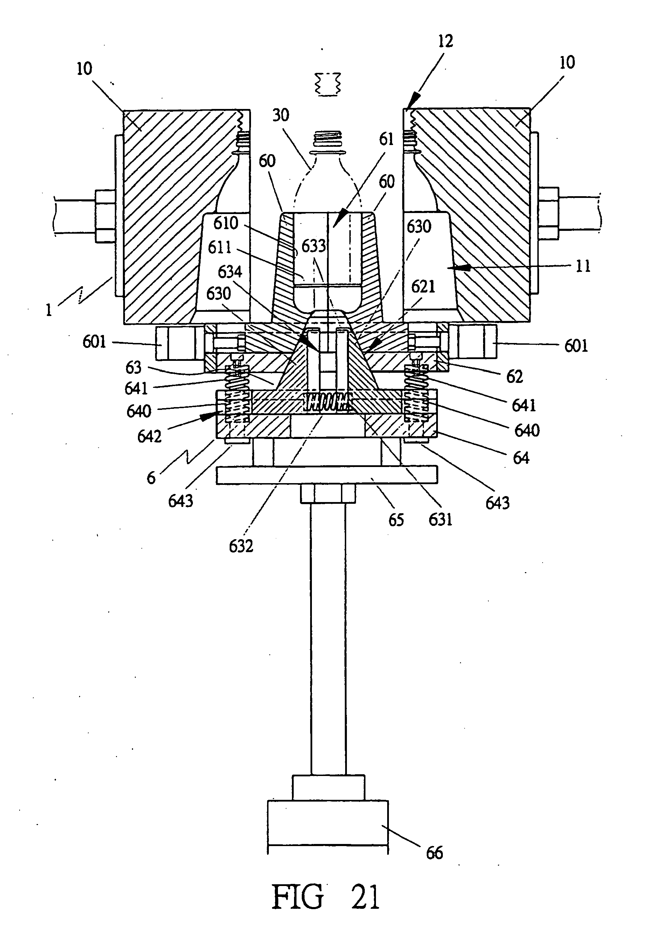

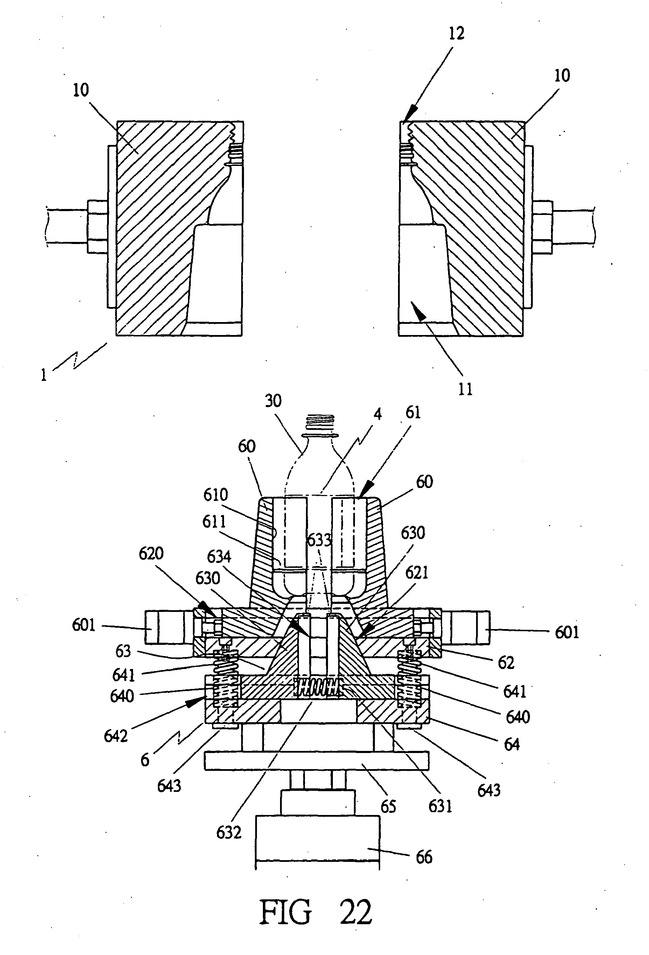

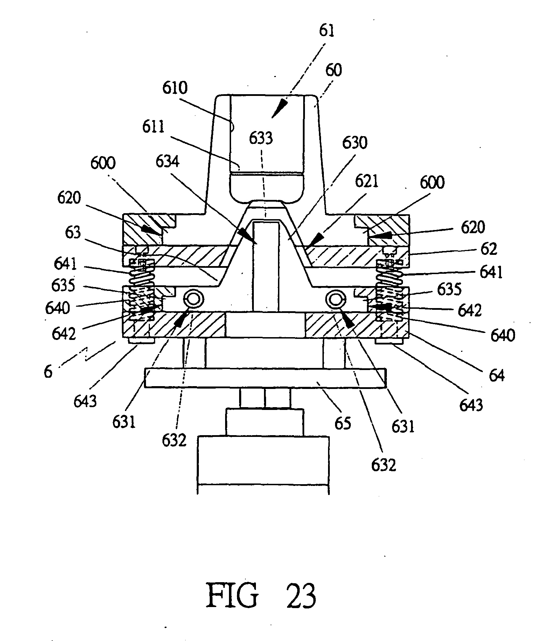

Further, Figs. 17 - 23 show a third embodiment of an internally label-sticking mold, including an outer mold 1 and an inner mold 6. The outer mold 1 consists of plural mold blocks 10, which form an interior hollow 11 after combined together. The outer mold 1 also has an inlet 12 for a shaped material 3A to pass through into the interior hollow 11 for easily blowing air to form the material 3A into a finished product 30.

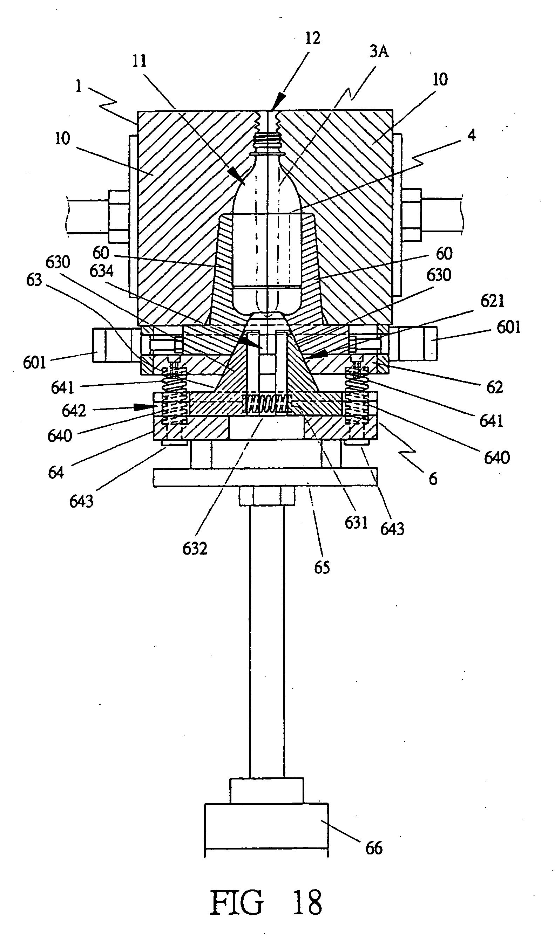

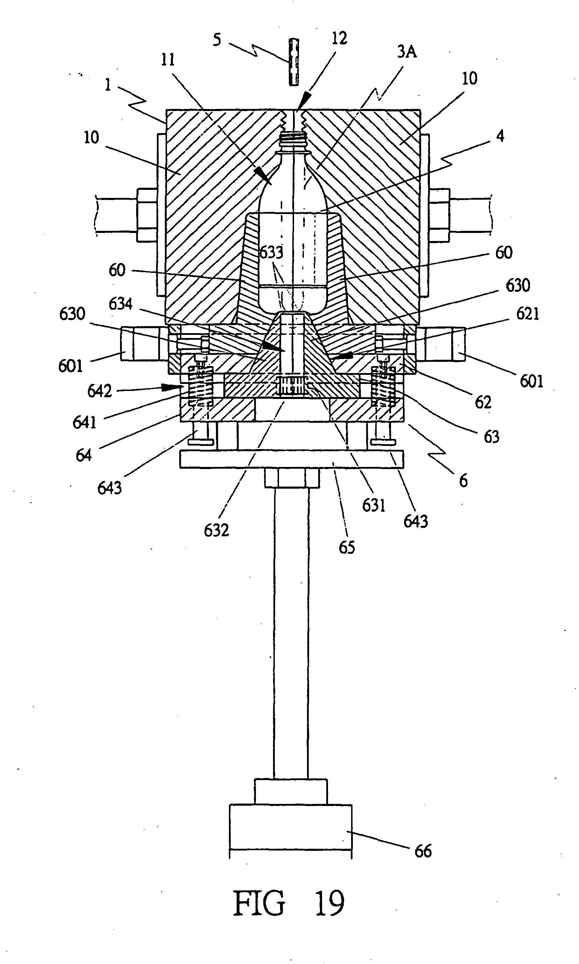

The inner mold 6 can consist of plural mold blocks 60 for enabling various shaped finished plastic products 30 (as shown in Figs. 18, 19 and 23) more easily taken out of the mold. A slide block member 600 is formed integral in a lower section of each mold block 60. Further a drive member 601 is provided with each mold block 60 to automatically open and close the mold blocks 60 so as to take out finished plastic products, as shown in Figs. 18 - 22. The inner mold 6 has an interior hollow 61 shaped the same as a part of various plastic products 30 to be molded, with an annular wall 611 formed on an inner surface 610 defining the interior hollow 61 for placing a label 4 for limiting the depth of the label placed around the interior hollow 61. Further, an upper mold base 62 is provided for supporting the inner mold 6, having a slide groove 620 for the slide block member 600 of the inner mold 6 to fit with, and a center hole 621 for positioning a cone-shaped clamp mold 63 consisting of plural clamp-mold blocks 630 with an outer sloped surface, and a coil spring 632 is placed between the plural clamp-mold blocks 630 for automatically opening and closing the clamp-mold blocks 630 to coordinate with automatic opening and closing movement of the inner mold 6. The upper mold base 32 further has a center hole 621 for the clamp mold 63 to fit therein so that the clamp mold 6 may open or close with a regular route. Further, the clamp mold 63 has a clamping member 633 defining a gap 734 for clamping a lower end of a shaped material 3A, as shown in Fig. 19. The plural clamp-mold blocks 630 have a slide block member 635 formed in a lower section, and a intermediate mold base 64 is provided to support the slide block members 635 of the clamp block 63, having plural holes 640 for springs 641 to extend through, and a slide groove 642 for the slide block members 635 to fit therein, and combined with the upper mold base 62 by means of vertical rods 643. Further, a lower mold base 65 is provided to support the intermediate mold base 64, firmly fixed with the intermediate mold base 64. Then another drive member 66 is provided under the lower mold base 65 to move the inner mold 6 together with the clamp mold 63 and the three mold bases 62, 64 and 65, and it may be an oil pressure cylinder, ar: air pressure cylinder, a threaded rod moved by a motor or by an oil pressure motor.

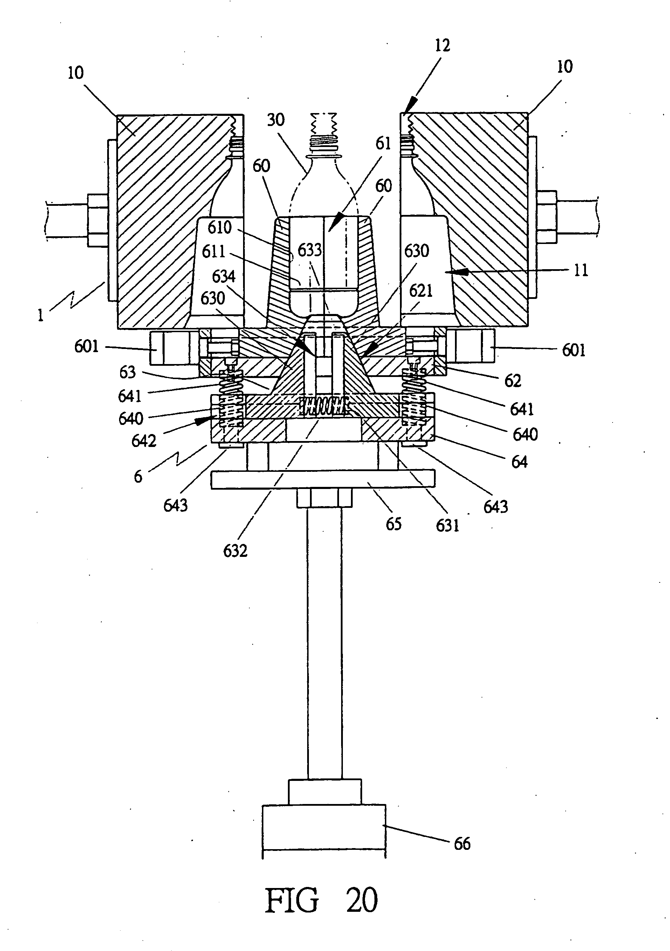

In using the third embodiment, a material 3A is placed in the outer mold 1, with a label 4 placed in advance in the interior hollow 61 of the inner mold 6. Next, the mold block 10 of the outer mold 1 is closed up, with the inner mold 6 pushed up into the interior hollow 11 of the outer mold 1 by the drive member 66 at the same time. Then the upper end of the material 3A is clamped in the outer mold 1 and the lower end of the material 3A is clamped in the inner mold 6, as shown in Fig. 19. After the material 3A is blown by air coming through the air tube 5 to become a plastic product (bottle), as shown in Figs. 20 - 23, the plastic bottle 30 is stuck with the label 4 as integral, resolving the falling-off problem of the label, which often happens in the conventional mold for manufacturing plastic bottles.

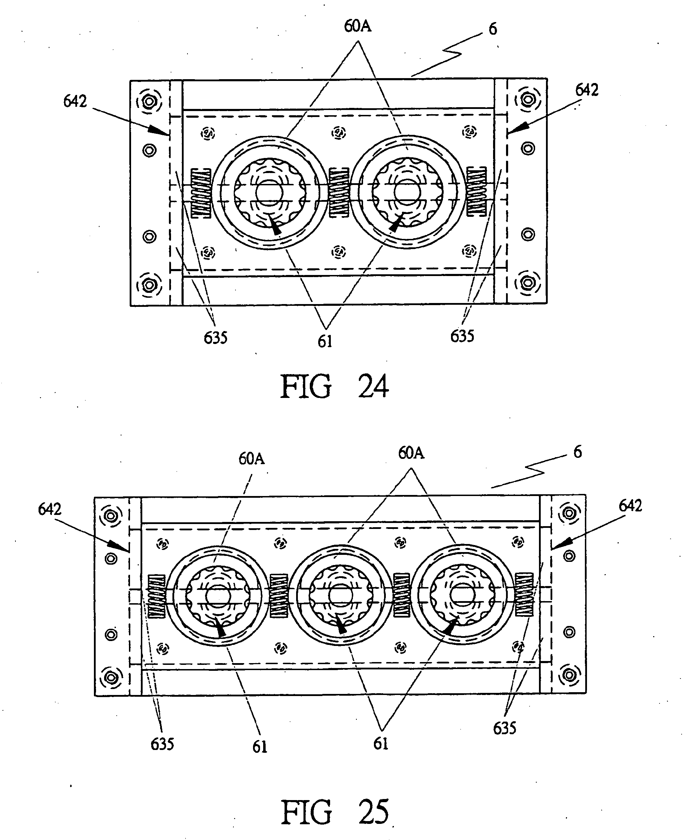

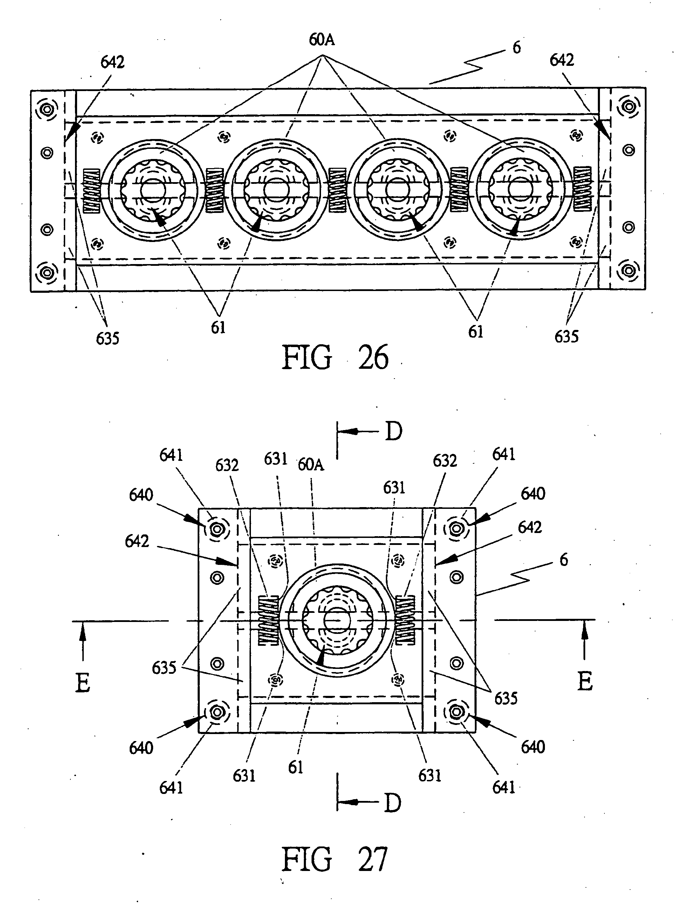

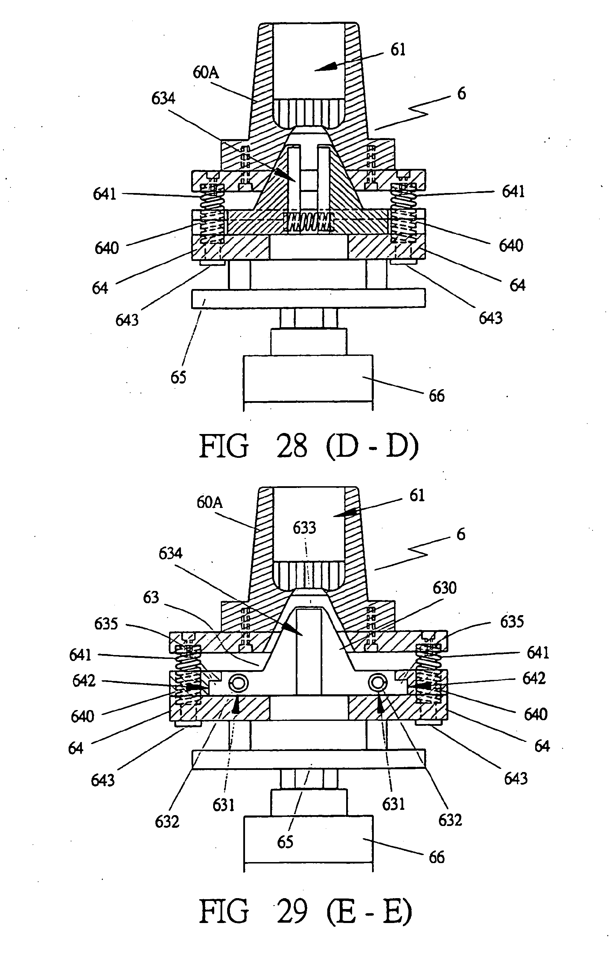

Further, Figs. 24 - 29 show a fourth embodiment of an internally label-sticking mold, all modified from the sixth embodiment, differing in an inner mold 6, which is made of one mold block 60A integral, and an interior hollow 61, without using the drive member 601, having the same effect as the sixth embodiment.

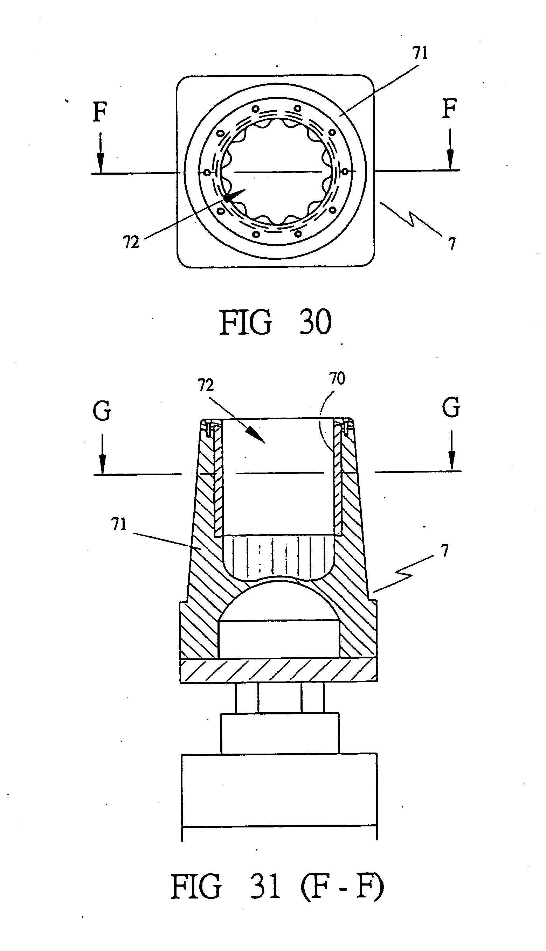

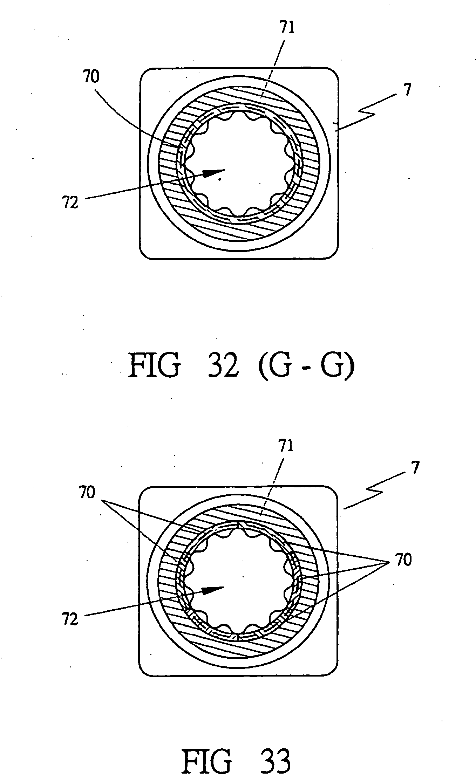

A fifth embodiment of an internally label-sticking mold in the invention shown in Figs. 30 to 32 includes an inner mold 7 provided with an inner and an outer block 70 and 71 both made of the same or different materials so the inner block 70 can be replaced with a new one if necessary to cope with different shapes of plastic products. Or if the inner block 70 is made of a different and non-conducting material (such as porcelain, or micro-crystal glass) from the that of the outer block 71, a label made of various proper plastics can be used to lower the cost of plastic products, utilizing the inner block 70 not susceptible to the heat of the inner mold groove 72. Further, as shown in the fifth embodiment shown in Fig. 33, plural inner blocks 70 are used to form gaps as air holes between every two inner blocks 70 so as to prevent wrinkles from forming to labels in molding process, having the same effect of the other embodiments described above.

While the preferred embodiments of the invention have been described above, it will be recognized and understood that various modifications may be made therein and the appended claims are intended to cover all such modifications of the invention as defined in the appended claims.

## Claims

1. An internally label-sticking mold comprising:
an outer mold (1) having an interior hollow (11) for containing an inner mold (2):
said inner mold (2) combined with said outer mold (1) after a shaped material (3) is placed in the interior hollow (23) of said outer mold (1), the shaped material (3) blown to become a plastic product (30) with the label (4) stuck on the plastic product (30);
said inner mold (2) having an interior hollow (23), an inner surface (230) defining said interior hollow (23) formed with an annular wall (231) for a label (4) to be placed thereon to limit the depth of the label (4) in said interior hollow (23); and that
the outer mold (1) consists of plural mold blocks (10), said plural mold blocks (10) forming an interior hollow (11) in the outer mold (1) after combined together, an inlet (12) formed in an upper side of said outer mold (1) for placing a shaped material in said interior hollow (11) and clamped firmly: the inner mold (2) **characterized by** either being made integral of one mold block, said mold block having a slide block member (220) formed in a lower section, said slide block member (220) fitted in a slide groove (210) of a lower mold base (21), a drive member (221) respectively provided at two opposite ends of said mold block to open and close said mold block for easily taking various shaped plastic product (30) out of the mold, another drive member (20) provided to move said inner mold (2) up and down, said another drive member (20) fixed firmly with said lower mold base (21), said lower mold base (21) having a slide groove (210) for said slide block member (220) of said mold block to fit therein, said inner mold (2) having an interior hollow (23) shaped as the shape of a plastic product (30) to be molded, or
the inner mold (6) consisting of plural mold blocks (60), said mold blocks (60) respectively forming a slide block member (600) in a lower section, a drive member (601) fixed at two opposite sides of said mold blocks (60) to open and close said mold blocks (60), said inner mold (6) having an interior hollow (61) shaped as the shape of a plastic product (30) to be molded; an upper mold base (62) provided to support said inner mold (6) and having a slide groove (620) for said slide block member (600) to fit therein and a center hole (621) for a cone-shaped clamp mold (63) to fit therein; said clamp mold (63) consisting of plural clamp-mold blocks (630) provided respectively with a spring groove for containing a coil spring (632) therein, said clamp mold (63) having a clamp member (633) provided with a gap (734) for catching the shaped material, each said clamp-mold block having a slide block member (635) in a lower section; an intermediate mold base (64) provided to support said clamp mold (63) and having plural holes (640) for coil springs (641) to extend though therein and a slide groove (642) for the slide block member (635) to fit therein, said intermediate mold base (64) firmly fixed with said upper mold (62) with vertical rods (643); a lower mold base (65) provided to support said intermediate mold base (64) and fixed firmly with said intermediate mold base (64); another drive member (66) provided to move said inner mold up and down.

2. The internally label-sticking mold as claimed in Claim 1, wherein said inner mold (2) is made of one-piece integral.

3. The internally label-sticking mold as claimed in Claim 1, wherein said inner mold (6) is made of one piece integral, not consisting of plural mold blocks (60).

4. The internally label-sticking mold as claimed in Claim 1, wherein said inner mold (7) consists of an outer block (70) and an inner block (71).

5. The internally label-sticking mold as claimed in claim 4 wherein said inner block (71) of said inner mold (7) consists of plural blocks.

## Patentansprüche

1. Gießform mit innerer Etikettanhaftung, die umfasst:
eine äußere Gießform (1) mit einem Innenhohlraum (11), um eine innere Gießform (2) aufzunehmen;
wobei die innere Gießform (2) mit der äußeren Gießform (1) kombiniert wird, wenn ein Formungsmaterial (3) in dem Innenhohlraum (23) der äußeren Gießform angeordnet worden ist, wobei das Formungsmaterial (3) aufgeblasen wird, damit es zu einem Kunststoffprodukt (30) wird, wobei an dem Kunststoffprodukt (30) das Etikett (4) haftet;
wobei die innere Gießform (2) einen Innenhohlraum (23) besitzt, wobei eine innere Oberfläche (230), die den Innenhohlraum (23) definiert, mit einer ringförmigen Wand (231) für ein darauf anzuordnendes Etikett (4) ausgebildet ist, um die Tiefe des Etiketts (4) in dem Innenhohlraum (23) zu begrenzen; und wobei
die äußere Gießform (1) aus mehreren Gießformblöcken (10) besteht, wobei die mehreren Gießformblöcke (10) in der äußeren Gießform (1) einen Innenhohlraum (11) definieren, nachdem sie miteinander kombiniert worden sind, wobei an einer Oberseite der äußeren Gießform (1) ein Einlass (12) ausgebildet ist, um geformtes Material in dem Innenhohlraum (11) anzuordnen und festzuklemmen; wobei die innere Gießform (2) **dadurch gekennzeichnet ist, dass** sie
entweder einteilig aus einem Gießformblock hergestellt ist, wobei der Gießformblock ein Gleitblockelement (220) besitzt, das in einem unteren Abschnitt ausgebildet ist, wobei das Gleitblockelement (220) in eine Gleitnut (210) einer unteren Gießformbasis (21) eingesetzt ist, wobei ein Antriebselement (221) an zwei entsprechenden gegenüberliegenden Enden des Gießformblocks vorgesehen ist, um den Gießformblock zu öffnen und zu schließen, um verschiedene geformte Kunststoffprodukte (30) aus der Gießform einfach zu entnehmen, wobei ein weiteres Antriebselement (20) vorgesehen ist, um die innere Gießform (2) aufwärts und abwärts zu bewegen, wobei das weitere Antriebselement (20) an der unteren Gießformbasis (21) fest angebracht ist, wobei die untere Gießformbasis (21) eine Gleitnut (210) für das Gleitblockelement (220) des Gießformblocks besitzt, um darin befestigt zu werden, wobei die innere Gießform (2) einen Innenhohlraum (23) besitzt, der wie die Form eines zu gießenden Kunststoffprodukts (30) geformt ist,
oder die innere Gießform (6) aus mehreren Gießformblöcken (60) besteht, wobei die Gießformblöcke (60) jeweils ein Gleitblockelement (600) in einem unteren Abschnitt bilden, wobei ein Antriebselement (610) an zwei entsprechenden gegenüberliegenden Seiten der Gießformblöcke (60) befestigt ist, um die Gießformblöcke (60) zu öffnen und zu schließen, wobei die innere Gießform (6) einen Innenhohlraum (61) besitzt, der wie die Form des zu gießenden Kunststoffprodukts (30) geformt ist; wobei eine obere Gießformbasis (62) vorgesehen ist, die die innere Gießform (6) unterstützt und eine Gleitnut (620) besitzt, in die das Gleitblockelement (600) eingesetzt werden kann, und eine Mittelbohrung (621) besitzt, in die eine kegelförmige Klemmgießform (63) eingesetzt werden kann; wobei die Klemmgießform (63) aus mehreren Klemmgießformblöcken (630) besteht, die jeweils mit einer Federnut versehen sind, um darin eine Schraubenfeder (632) zu halten, wobei die Klemmgießform (63) ein Klemmelement (633) besitzt, das mit einem Spalt (734) versehen ist, um das Formungsmaterial einzufangen, wobei jeder Klemmgießform-Block in einem unteren Abschnitt ein Gleitblockelement (635) besitzt; wobei eine Zwischengießformbasis (64) vorgesehen ist, die die Klemmgießform (63) unterstützt und mehrere Löcher (640) für Schraubenfedern (641), die durch sie verlaufen, und eine Gleitnut (642), in das das Gleitblockelement (635) eingesetzt werden kann, besitzt, wobei die Zwischengießformbasis (64) mit der oberen Gießform (62) mittels vertikaler Stäbe (643) fest verbunden ist; wobei eine untere Gießformbasis (65) vorgesehen ist, die die Zwischengießformbasis (64) unterstützt und mit der Zwischengießformbasis (64) fest verbunden ist, wobei ein weiteres Antriebselement (66) vorgesehen ist, um die innere Gießform aufwärts und abwärts zu bewegen.

2. Gießform mit innerer Etikettanhaftung nach Anspruch 1, wobei die innere Gießform (2) einteilig ausgebildet ist.

3. Gießform mit innerer Etikettanhaftung nach Anspruch 1, wobei die innere Gießform (6) einteilig ausgebildet ist und nicht aus mehreren Gießformblöcken (60) besteht.

4. Gießform mit innerer Etikettanhaftung nach Anspruch 1, wobei die innere Gießform (7) aus einem äußeren Block (70) und aus einem inneren Block (71) besteht.

5. Gießform mit innerer Etikettanhaftung nach Anspruch 4, wobei der innere Block (71) der inneren Gießform (7) aus mehreren Blöcken besteht.

## Revendications

1. Moule avec collage d'étiquette à l'intérieur comprenant :
un moule extérieur (1) ayant un congé intérieur (11) pour contenir un moule intérieur (2) :
ledit moule intérieur (2) étant combiné avec ledit moule extérieur (1) après qu'un matériau formé (3) soit placé dans le congé intérieur (23) dudit moule extérieur (1), le matériau formé (3) étant soufflé pour devenir un produit en plastique (30) avec l'étiquette (4) collée sur le produit en plastique (30) ;
ledit moule intérieur (2) ayant un congé intérieur (23), une surface intérieure (230) définissant ledit congé intérieur (23) formé avec une paroi annulaire (231) pour qu'une étiquette (4) y soit placée pour limiter la hauteur de l'étiquette (4) dans le ledit congé intérieur (23) ; et
le moule extérieur (1) consiste en une pluralité de blocs de moule (10), ladite pluralité de blocs de moule (10) formant un congé intérieur (11) dans le moule extérieur (1) après avoir été combinés ensemble, une entrée (12) formée du côté supérieur dudit moule extérieur (1) pour placer un matériau formé dans ledit congé intérieur (11) et serré solidement :
le moule intérieur (2) étant **caractérisé en ce qu'**il est fait d'un seul tenant avec un bloc de moule, ledit bloc de moule ayant un élément de bloc coulissant (220) formé dans une section inférieure, ledit élément de bloc coulissant (220) étant ajusté dans une rainure à glissière (210) d'une base de moule inférieur (21), un élément d'entraînement (221) prévu respectivement aux deux extrémités opposées dudit bloc de moule pour ouvrir et fermer ledit bloc de moule pour retirer facilement un produit en plastique de forme variée (30) hors du moule, un autre élément d'entraînement (20) prévu pour déplacer ledit moule intérieur (2) de haut en bas, ledit autre élément d'entraînement (20) étant fixé solidement à ladite base de moule inférieur (21), ladite base de moule inférieur (21) ayant une rainure à glissière (210) pour que ledit élément de bloc coulissant (220) dudit bloc de moule s'ajuste à l'intérieur, ledit moule intérieur (2) ayant un congé intérieur (23) formé selon la forme d'un produit en plastique (30) destiné à être moulé, ou
le moule intérieur (6) consistant en une pluralité de blocs de moule (60), lesdits blocs de moule (60) formant respectivement un élément de bloc coulissant (600) dans une section inférieure, un élément d'entraînement (601) étant fixé aux deux côtés opposés desdits blocs de moule (60) pour ouvrir et fermer lesdits blocs de moule (60), ledit moule intérieur (6) ayant un congé intérieur (61) formé selon la forme d'un produit en plastique (30) destiné à être moulé ; une base de moule supérieur (62) prévue pour supporter ledit moule intérieur (6) et ayant une rainure à glissière (620) pour que l'élément de bloc coulissant (600) soit ajusté à l'intérieur et un orifice central (621) pour qu'un moule de serrage en forme de cône (63) s'ajuste à l'intérieur ; ledit moule de serrage (63) étant constitué d'une pluralité de blocs de moule de serrage (630) munis respectivement d'une rainure à ressort pour contenir un ressort à glissière (632) à l'intérieur, ledit moule de serrage (63) ayant un élément de serrage (633) muni d'un espace (734) pour piéger le matériau formé, chacun desdits blocs de moule de serrage ayant un élément de bloc coulissant (635) dans une section inférieure ; une base de moule intermédiaire (64) prévue pour supporter ledit moule de serrage (63) et ayant une pluralité d'orifices (640) pour que des ressorts hélicoïdaux (641) s'étendent à l'intérieur et une rainure à glissière (642) pour que l'élément de bloc coulissant (635) soit ajusté à l'intérieur, ladite base de moule intermédiaire (64) étant fixée solidement audit moule supérieur (62) avec des broches verticales (643) ; une base de moule inférieur (65) étant prévue pour supporter ladite base de moule intermédiaire (64) et fixée solidement à ladite base de moule intermédiaire (64) ; un autre élément d'entraînement (66) étant prévu pour déplacer ledit moule intérieur de haut en bas.

2. Moule avec collage d'étiquette à l'intérieur selon la revendication 1, dans lequel ledit moule intérieur (2) est fait d'une seule pièce.

3. Moule avec collage d'étiquette à l'intérieur selon la revendication 1, dans lequel ledit moule intérieur (6) est fait d'une seule pièce, ne consistant pas en une pluralité de blocs de moule (60).

4. Moule avec collage d'étiquette à l'intérieur selon la revendication 1, dans lequel ledit moule intérieur (7) consiste en un bloc extérieur (70) et un bloc intérieur (71).

5. Moule avec collage d'étiquette à l'intérieur selon la revendication 4, dans lequel ledit bloc intérieur (71) dudit moule intérieur (7) consiste en une pluralité de blocs.
